# EUROPEAN PATENT APPLICATION

(11) **EP 2 250 952 A1**
(43) Date of publication of application: **17.11.2010**
(21) Application number: 10160373.6
(22) Date of filing: 19.04.2010
(51) Int. Cl.: A47J 45/10

(54) **Detachable handle usable with kitchen container**

(30) Priority: 12.05.2009 KR 20090041223; 15.07.2009 KR 20090064605
(71) Applicant: Park, Hoe Suk, Tongin-eup Gimpo Gyeonggi-do (KR)
(72) Inventor: Park, Hoe Suk, Tongin-eup Gimpo Gyeonggi-do (KR)
(74) Representative: Clarke, Jeffrey

(57) **Abstract**

Disclosed is a detachable handle usable with a kitchen container. A main pivoting plate is reciprocally moved forward or rearward under the assistance of elasticity of a horizontal spring as a rotating plate is eccentrically rotated clockwise or counterclockwise to arcuately come into contact with a target rod of the main pivoting plate, whereby a front protrusion of a lower body and a grip of the main pivoting plate can be moved toward or away from each other in a simplified manner. As a result, the detachable handle usable with the kitchen container is able to spontaneously grip or release the kitchen container according to a thickness of the kitchen container, resulting in convenience in use and superior productivity and assembly efficiency owing to a simplified and firm configuration thereof.

## Description

### BACKGROUND OF THE INVENTION

### Field of the Invention

The present invention relates to a detachable handle usable with a kitchen container, and more particularly, to a detachable handle usable with a kitchen container, which enables simplified actions and firm assembly thereof and can spontaneously grip or release a kitchen container according to a thickness of the kitchen container.

### Description of the Related Art

Generally, although most kitchen containers are fixedly mounted with handles to enable safe use, the handles may increase a space occupied by the kitchen containers when one wishes to stack the kitchen containers one above another, thus causing inconvenience in use. Moreover, fixing a handle on a per kitchen container basis disadvantageously results in deterioration in the productivity of kitchen containers.

To solve the above described problems, Korean Patent Application No. 10-2002-0030135 entitled "HANDLE FOR COOKING CONTAINER" was filed on May 30, 2002.

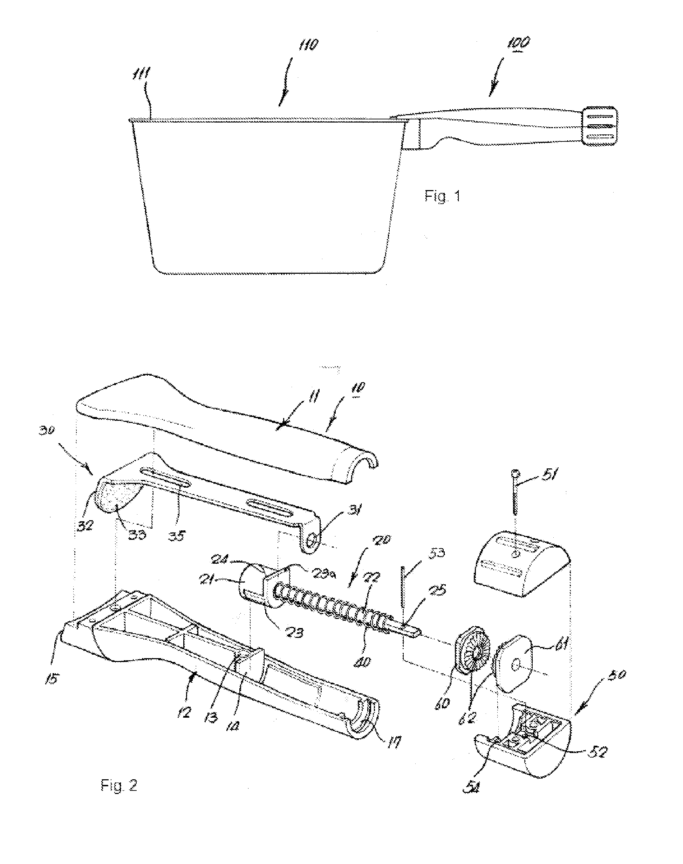

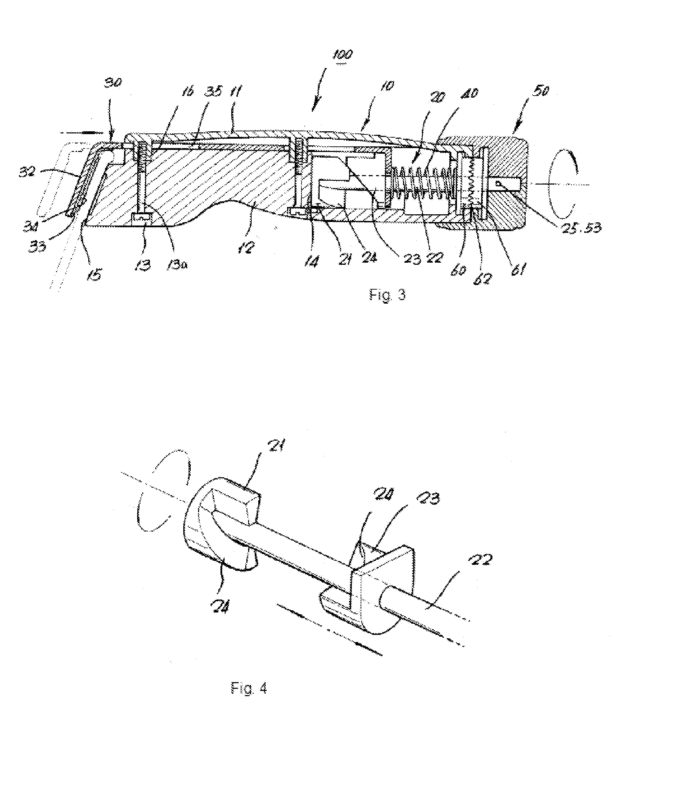

FIG. 1 is a view illustrating a use example of a cooking container handle disclosed in the above mentioned earlier application. FIG. 2 is an exploded perspective view illustrating the cooking container handle of the earlier application, FIG. 3 is a view illustrating an operation of the cooking container handle of the earlier application, and FIG. 4 is a perspective view illustrating important parts of the cooking container handle of the earlier application. In the drawings, reference numeral 100 indicates a handle, and reference numeral 110 indicates a cooking container.

The cooking container 110 includes an outwardly bent flange 111.

The handle 110 has an approximately cylindrical shape allowing a user to easily grip the handle 110. The handle 110 includes a body 10, which has a predetermined length and is injection molded using synthetic resin. Specifically, the body 10 consists of an upper member 11 and a lower member 12 assembled to face each other.

The lower member 12 has a pair of front and rear bolt holes 13 vertically perforated therethrough, a supporting wall 14 formed in the center thereof to support cams (i.e. an actuating cam 21 and a moving cam 23) of a power transmission member 20 closely coupled thereto, and an inclined coupling plane 15 provided at a front end thereof to be coupled to the cooking container 110 by means of a clip member 30 that will be described hereinafter.

The upper member 11 is assembled to the lower member 12 such that a lower end of the upper member 11 comes into contact with an upper end of the lower member 12. To this end, the upper member 11 has nut protrusions 16 slightly protruding downward from the lower end thereof so as to correspond to the respective bolt holes 13 of the lower member 12.

Accordingly, assembly of the upper and lower members 11 and 12 of the body 10 is completed as fixing bolts 13a are fastened through the bolt holes 13.

The power transmission member 20 is accommodated within the body 10 and is rotated by rotation force of an adjusting member 50 that will be described hereinafter.

The power transmission member 20 includes a supporting rod 22, the actuating cam 21 fitted on a front end of the supporting rod 22, and the moving cam 23 forwardly or rearwardly movably fitted on the supporting rod 22 while being engaged with the actuating cam 21 to face each other.

Specifically, the actuating cam 21 and the moving cam 23 respectively have circumferentially inclined surfaces 24 to be engaged with each other. The supporting rod 22 further has a pin hole 25 perforated in a rear end thereof, through which a fixing pin 53 that will be described hereinafter is fastened.

The moving cam 23 has a flat upper surface 23a to come into surface contact with a lower surface of the clip member 30 that will be described hereinafter. Accordingly, the moving cam 23 is adapted to perform only forward or rearward movement rather than being rotated even if the actuating cam 21 is rotated.

With the forward or rearward movement of the moving cam 23, the clip member 30 connected to the supporting rod 22 is moved forward or rearward.

To this end, the clip member 30 takes the form of a U-shaped metal piece front and rear ends of which are bent. The rear end of the clip member 30 is inserted on the supporting rod 22 of the power transmission member 20 through a penetration hole 31, and the front end of the clip member 30 defines an inclined clip plane 32.

The clip plane 32 is inclined forward to come into close contact with an inner circumferential surface of the cooking container 110. The clip plane 32 functions to clamp the cooking container 110, along with the coupling plane 15 of the lower member 12 of the body 10.

To enhance clamping ability with respect to the cooking container 110, an anti-slippage piece 33 is integrally attached to an inner surface of the clip plane 32. The anti-slippage piece 33 may be made of synthetic resin, and may be formed at a surface thereof with a plurality of bosses 34.

The clip member 30 further has a pair of front and rear guide slots 35 spaced apart from each other by a predetermined distance. Once the clip member 30 is coupled to the upper and lower members 11 and 12 of the body 10, the nut protrusions 16 of the upper member 11 penetrate through the guide slots 35, thus acting to support the clip member 30 while allowing forward or rearward movement of the clip member 30.

A coil spring 40 having predetermined elasticity is inserted around the supporting rod 22 of the power transmission member 20. The coil spring 40 functions to continuously push a rear surface of the clip member 30 connected to the supporting rod 22 forward.

In addition to forwardly pushing the clip member 30, the coil spring 40 further functions to push the moving cam 23 toward the actuating cam 21, thus enabling accurate engagement of the inclined surfaces 24 of both the cams 21 and 23.

In the drawings, reference numeral 50 indicates the adjusting member fastened to a rear end of the body 10.

The adjusting member 50 functions as an adjusting knob and is divided into upper and lower parts to be assembled to face each other. The adjusting member 50 is fastened to the rear end of the body 10 by means of a fixing bolt 51 and is configured to allow the user to rotate the adjusting member 50 in a forward or reverse direction by hand.

The adjusting member 50 is assembled to the body 10 in such a way that a front portion of the adjusting member 50 surrounds a part of the rear end of the body 10. Thus, the adjusting member 50 is able to rotate about the rear end of the body 10. The adjusting member 50 is centrally formed with a fixing hole 52 such that the fixing pin 53 is fastened through the pin hole 25 perforated in the rear end of the supporting rod 22 and the fixing hole 52 in sequence, so as to integrally fix the adjusting member 50 to the power transmission member 20.

As the adjusting member 50 and the power transmission member 20 are integrally fastened to each other by means of the fixing pin 53, the power transmission member 20 is rotatable in a forward or reverse direction simultaneously with forward or reverse rotation of the adjusting member 50.

A pair of stop members, which are designated by reference numerals 60 and 61 in the drawings, is interposed between the rear end of the body 10 and the adjusting member 50. The stop members 60 and 61 serve to restrict rotation of the adjusting member 50.

The pair of stop members 60 and 61 is respectively formed with teeth 62 in a circumferential direction thereof and is arranged to face each other such that the teeth 62 come into contact with and are engaged with each other.

One of the stop members 60 is inserted into and fixed in installation recesses 17 formed in rear ends of the upper and lower members 11 and 12 of the body 10. The stop member 60 has a centrally perforated shaft hole such that the supporting rod 22 of the power transmission member 20 is inserted through the stop member 60 so as to perform idle rotation.

The other stop member 61 is integrally inserted into and fixed in an installation recess 54 of the adjusting member 50 and thus, is rotated along with the power transmission member 20 according to forward or reverse rotation of the adjusting member 50.

In a state wherein the teeth 62 of both the stop members 60 and 61 are engaged with each other, the coil spring 40 acts to elastically push the stop member 60 inserted in the installation recess 17 of the body 10 rearward. This assures effective engagement of the teeth 62 of both the stop members 60 and 61. In addition, the stop members 60 and 61 having the above described configuration may function to keep the adjusting member 50 stationary when rotation of the adjusting member 50 stops and to allow smooth driving of the adjusting member 50 when the adjusting member 50 is being rotated.

Accordingly, the handle 100 of the above mentioned earlier application is provided independently of a cooking container and if necessary, is able to be assembled to one of cooking containers designed to be stacked one above another upon storage.

For example, to couple the handle 110 to the cooking container 110 when in use, first, the circumferential flange 111 of the cooking container 110 is inserted between the clip plane 32 provided at the front end of the clip member 30 and the coupling plane 15 provided at the front end of the lower member 12 of the body 10.

In this case, an insertion position of the flange 111 is freely selectable because the flange 111 of the cooking container 110 has a constant shape in a circumferential direction thereof.

Then, if the user rotates the adjusting member 50 provided at the rear end of the handle 100 in a forward direction, the power transmission member 20 fixed to the adjusting member 50 by means of the fixing pin 53 performs idle rotation within the body 10.

As the actuating cam 21 formed at the front end of the power transmission member 20 is rotated, the moving cam 23 coming into close contact with the actuating cam 21 via the inclined surfaces 24 thereof is moved rearward, thus acting to move the clip member 30 rearward.

More specifically, since the actuating cam 21 and the moving cam 23 are engaged with each other via the inclined surfaces 24 thereof and in turn, the flat upper surface 23a of the moving cam 23 continuously comes into close contact with the clip member 30, the moving cam 23 performs only forward or rearward movement rather than being rotated even if rotation of the actuating cam 21 is transmitted to the moving cam 23.

The coil spring 40 is compressed with rearward movement of the moving cam 23, thus pushing the clip member 30 rearward. The clip member 30 is moved rearward under guidance of the nut protrusions 16 of the upper member 11 of the body 10 penetrating through the front and rear guide slots 35 of the clip member 30.

As a result, a distance between the clip plane 32 of the clip member 30 and the coupling plane 15 of the lower member 12 is reduced, realizing firm clamping of the cooking container 110 inserted between the clip plane 32 and the coupling plane 15.

In the above described operation, the adjusting member 50 is fastened to the body 10 to surround the rear end of the body 10, thus enabling smooth rotation about the rear end of the body 10. In addition, the adjusting member 50 is kept stationary by the engaged teeth 62 of both the stop members 60 and 61 when rotation of the adjusting member 50 stops.

On the other hand, to separate the handle 100 from the cooking container 110, the adjusting member 50 is rotated in a reverse direction and thus, the clip member 30 is moved forward in reverse to the above described operation. In this way, the handle 100 is easily separated from the cooking container 110.

However, the handle 100 for the cooking container 110 disclosed in the above mentioned earlier application adopts a complicated configuration including the actuating cam 21, the moving cam 23, the stop members 60 and 61 and the adjusting member 50 and thus, suffers from deterioration in productivity and assembly efficiency thereof. Further, abrasion of the teeth 62 may disadvantageously shorten lifespan of the handle 100. Furthermore, since a distance between the clip plane 32 and the coupling plane 15 depends on an inclination angle of the inclined surfaces 24 of the actuating cam 21 and the moving cam 23, the distance may be narrow. However, an attempt to increase the inclination angle of the inclined surfaces 24 for the purpose of increasing the distance between the clip plane 32 and the coupling plane 15 may unintentionally increase the overall size of the handle 100.

### SUMMARY OF THE INVENTION

Therefore, the present invention has been made in view of the above problems, and it is an object of the present invention to provide a detachable handle usable with a kitchen container, which can detachably grip or release a kitchen container and be spontaneously adapted according to a thickness of the kitchen container while assuring superior productivity and assembly efficiency owing to a simplified configuration thereof.

In accordance with the present invention, the above and other objects can be accomplished by the provision of a detachable handle for a kitchen container including a lower body having a front protrusion formed at a front end thereof, a main recess extending rearward from the front protrusion, a horizontal recess extending rearward from the main recess, and a vertical recess indented in the main recess, a main pivoting plate configured to be seated in the main recess of the lower body, the main pivoting plate having a grip extending downward from a front end thereof to face the front protrusion of the lower body, a supporting pin extending toward the horizontal recess, a large-diameter hole coinciding with the vertical recess, a medium-diameter hole and an elongated small-diameter hole extending rearward from the large-diameter hole in sequence, and a target rod formed at a rear end thereof, a horizontal spring fitted to the supporting pin while being mounted in the horizontal recess, so as to push the main pivoting plate toward the front protrusion of the lower body, a vertical spring inserted into the vertical recess of the lower body, a button shaft supported by the vertical spring and having a large-diameter portion having the same diameter as that of the large-diameter hole, a medium-diameter portion having the same diameter as that of the medium-diameter hole, a small-diameter portion having the same diameter as that of the elongated small-diameter hole, and an expanded holding portion extending upward from the small-diameter portion, a rotating plate adapted to be rotated about an eccentrically positioned pivoting shaft thereof so as to push the target rod toward the horizontal spring while arcuately coming into contact with the target rod, an upper body shaped to coincide with the lower body and having a button hole through which the button shaft is inserted to protrude upward such that the expanded holding portion is supported by the upper body, a shaft hole through which the pivoting shaft is inserted to protrude upward, and a circular recess indented in an upper surface of the upper body around the shaft hole, and a lever seated in the circular recess while being coupled to the pivoting shaft, the lever being rotatable clockwise or counterclockwise.

According to the present invention, the main pivoting plate is reciprocally moved forward or rearward under the assistance of elasticity of the horizontal spring as the rotating plate is eccentrically rotated clockwise or counterclockwise to arcuately come into contact with the target rod, whereby the front protrusion of the lower body and the grip can be moved toward or away from each other in a simplified manner. As a result, the detachable handle usable with the kitchen container can spontaneously grip or release the kitchen container according to a thickness of the kitchen container, resulting in convenience in use and superior productivity and assembly efficiency owing to a simplified and firm configuration thereof.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a view illustrating a use example of a conventional cooking container handle;
FIG. 2 is an exploded perspective view of the conventional cooking container handle;
FIG. 3 is a view illustrating an operation of the conventional cooking container handle;
FIG. 4 is a perspective view illustrating important parts of the conventional cooking container handle;
FIG. 5 is an exploded perspective view illustrating a detachable handle usable with a kitchen container according to the present invention;
FIGS. 6A to 6F are perspective views illustrating an assembly sequence of the detachable handle usable with the kitchen container according to the present invention;
FIG. 7A is a view illustrating a state in which the detachable handle according to the present invention releases a kitchen container;
FIG. 7B is a view illustrating a state in which the detachable handle according to the present invention grips a kitchen container having a large thickness; and
FIG. 7C is a view illustrating a state in which the detachable handle according to the present invention grips a kitchen container having a small thickness.

### DETAILED DESCRIPTION OF THE INVENTION

Hereinafter, a preferred embodiment of a detachable handle usable with a kitchen container according to the present invention will be described with reference to the accompanying drawings.

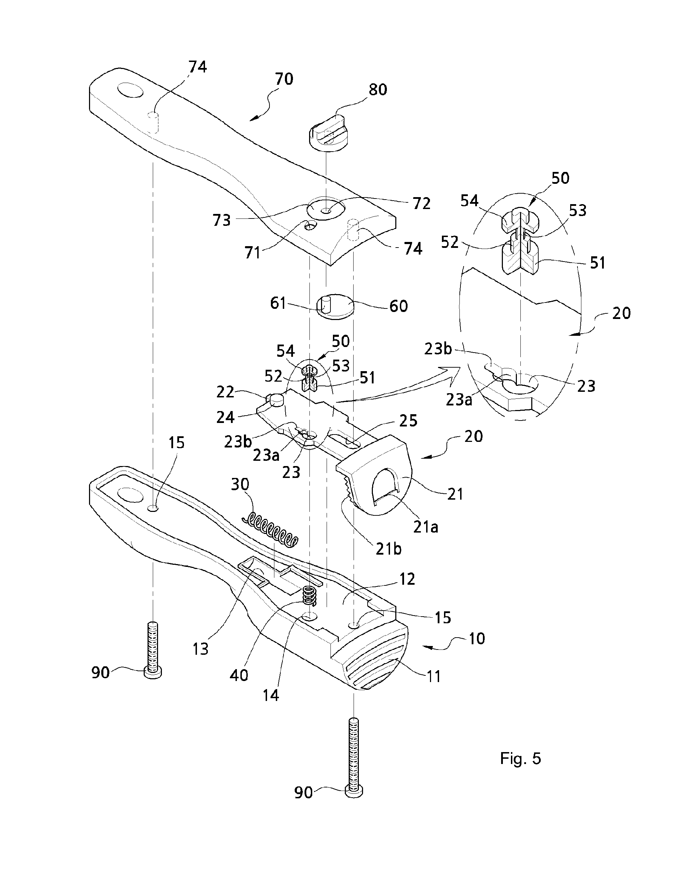

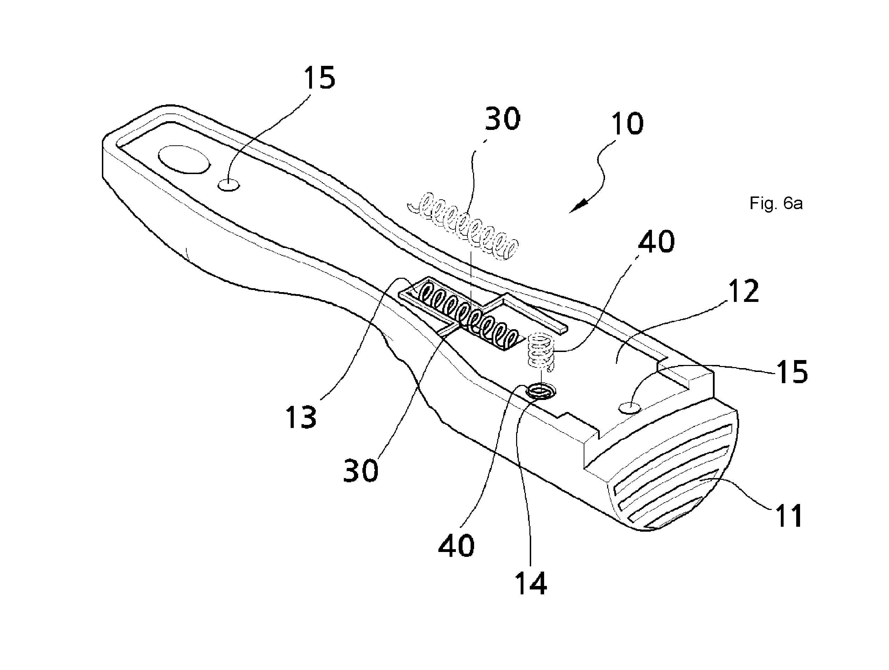

FIG. 5 is an exploded perspective view illustrating a detachable handle usable with a kitchen container according to the present invention, and FIGS. 6A to 6F are perspective views illustrating an assembly sequence of the detachable handle usable with the kitchen container according to the present invention.

The detachable handle usable with the kitchen container according to the present invention, as illustrated in FIGS. 5 to 6F, includes a lower body 10, an upper body 70, a main pivoting plate 20, a horizontal spring 30, a vertical spring 40, a button shaft 50, and a rotating plate 60.

More specifically, the lower body 10 and the upper body 70 are shaped to coincide with each other.

The lower body 10 has a main recess 12 extending rearward from a front protrusion 11 thereof, a horizontal recess 13 extending rearward from the main recess 12, and a vertical recess 14 indented in the main recess 12.

The main pivoting plate 20 is configured to be seated in the main recess 12 and has a grip 21 extending downward from a front end thereof to face the front protrusion 11 of the lower body 10. The main pivoting plate 20 further has a supporting pin 22 extending toward the horizontal recess 13, a large-diameter hole 23 coinciding with the vertical recess 14, a medium-diameter hole 23a and an elongated small-diameter hole 23b extending rearward from the large-diameter hole 23 in sequence, and a target rod 24 formed at a rear end thereof.

The horizontal spring 30 is fitted to the supporting pin 22 while being mounted in the horizontal recess 13, thus acting to push the main pivoting plate 20 toward the front protrusion 11 of the lower body 10. The vertical spring 40 is inserted into the vertical recess 14.

The button shaft 50 is supported by the vertical spring 40. The button shaft 50 includes a large-diameter portion 51 having the same diameter as that of the large-diameter hole 23, a medium-diameter portion 52 having the same diameter as that of the medium-diameter hole 23a, a small-diameter portion 53 having the same diameter as that of the elongated small-diameter hole 23b, and an expanded holding portion 54 extending upward from the small-diameter portion 53.

The rotating plate 60 has an eccentrically positioned pivoting shaft 61. The rotating plate 60 is eccentrically rotated about the pivoting shaft 61 to arcuately come into contact with the target rod 24, thus acting to push the target rod 24 toward the horizontal spring 30.

The upper body 70 has a button hole 71 through which the button shaft 50 is inserted to protrude upward such that the expanded holding portion 54 is supported by the upper body 70, a shaft hole 72 through which the pivoting shaft 61 is inserted to protrude upward, and a circular recess 73 indented in an upper surface of the upper body 70 around the shaft hole 72.

A lever 80 is coupled to the pivoting shaft 61 and is seated in the circular recess 73 so as to be rotatable clockwise or counterclockwise. The grip 21 of the main pivoting plate 20 is perforated with a bottle opener hole 21a, thus allowing the detachable handle usable with the kitchen container to function as a bottle opener.

To enable assembly of the lower body 10 and the upper body 70, the lower body 10 is perforated with a fastening bore 15 and the upper body 70 is perforated with a fastening recess 74, such that a fastening bolt 90 is fastened into the fastening recess 74 by passing through the fastening hole 15.

The main pivoting plate 20 has an elongated fastening slot 25 serving as a passage of the fastening bolt 90. Accordingly, the fastening bolt 90 may serve to guide forward or rearward reciprocating motion of the main pivoting plate 20.

The grip 21 has an embossed cushion 21b formed at a surface thereof facing the front protrusion 11 of the lower body 10 to more tightly grip the kitchen container.

Hereinafter, an assembly operation of the detachable handle usable with the kitchen container having the above described configuration according to the present invention will be described.

As illustrated in FIG. 6A, the vertical spring 40 is inserted into the vertical recess 14 of the lower body 10 and the horizontal spring 30 is mounted in the horizontal recess 13.

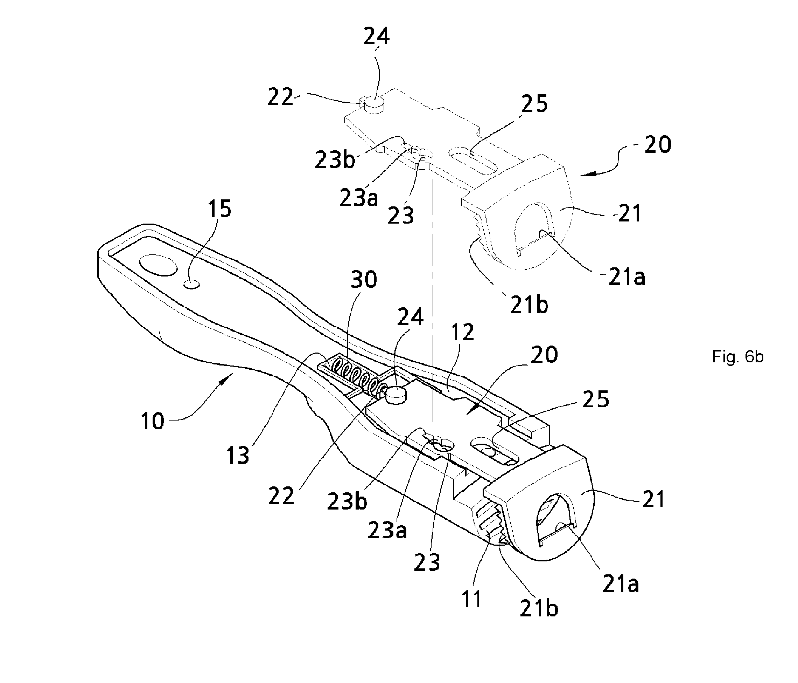

As illustrated in FIG. 6B, the main pivoting plate 20 is engaged into the main recess 12 of the lower body 10 such that the supporting pin 22 is fitted into the vertical spring 40.

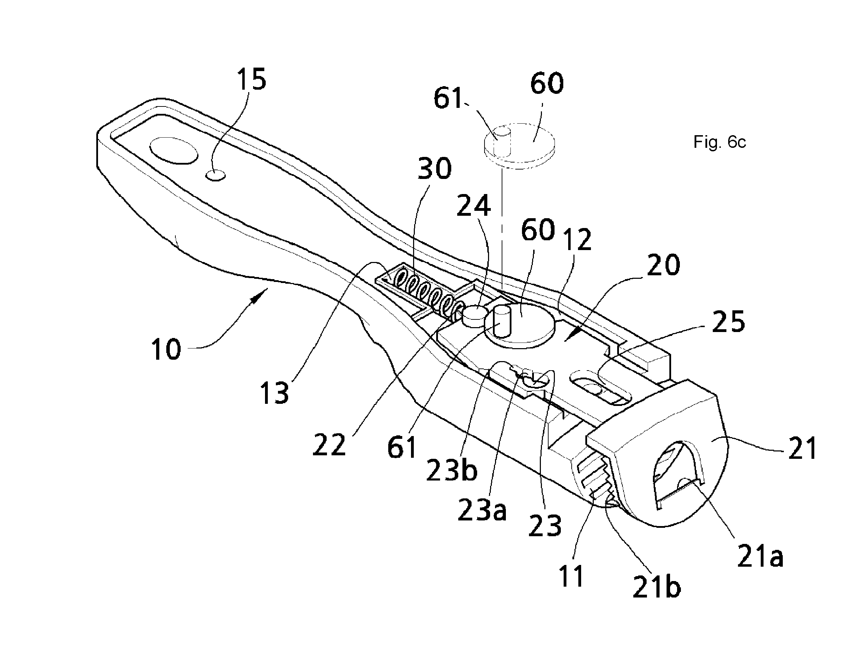

As illustrated in FIG. 6C, the rotating plate 60 is disposed on the main pivoting plate 20.

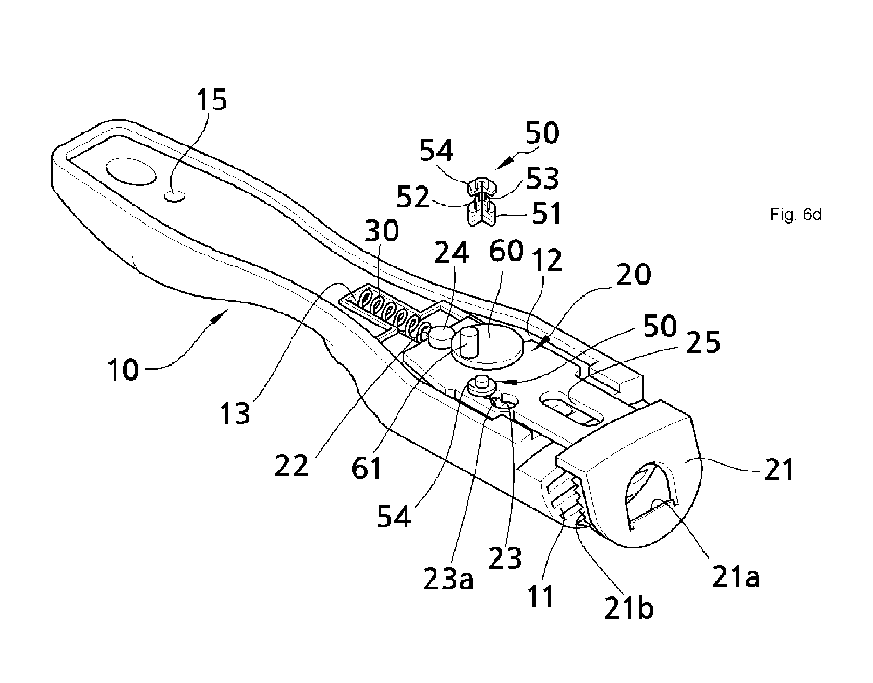

As illustrated in FIG. 6D, the button shaft 50 is fitted through the large-diameter hole 23 of the main pivoting plate 20 to thereby be seated on the vertical spring 40.

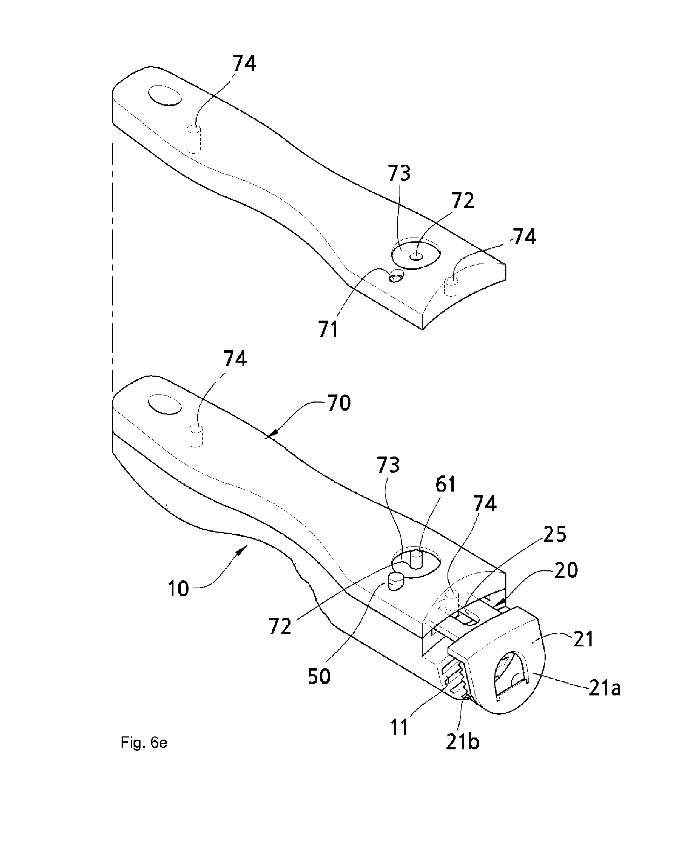

As illustrated in FIG. 6E, the pivoting shaft 61 of the rotating plate 60 is fitted into the shaft hole 72 of the upper body 70.

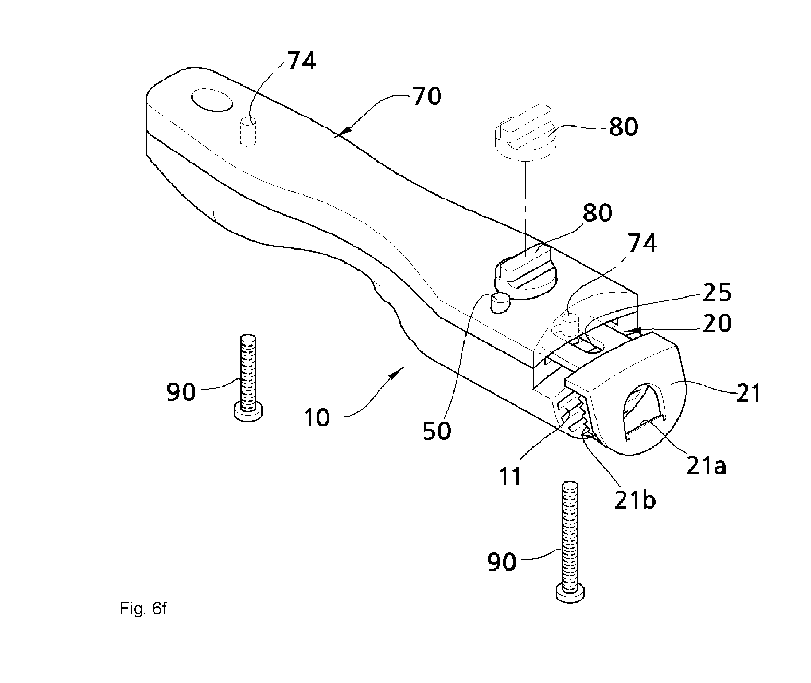

As illustrated in FIG. 6F, the lever 80 is fitted onto the pivoting shaft 61 protruding upward from the shaft hole 72 of the upper body 70 to thereby be seated into the circular recess 73 of the upper body 70. Then, once the fastening bolt 90 (wrench bolt) is fastened through the fastening hole 15 and the fastening recess 74, the assembly of the detachable handle is completed.

Now, operation of the detachable handle usable the kitchen container having the above described configuration of the present invention will be described.

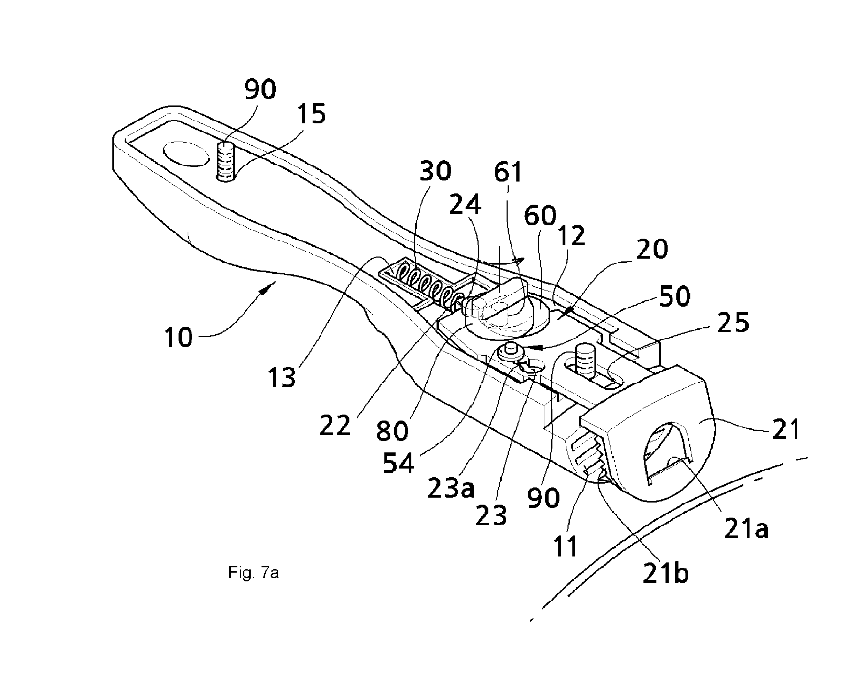

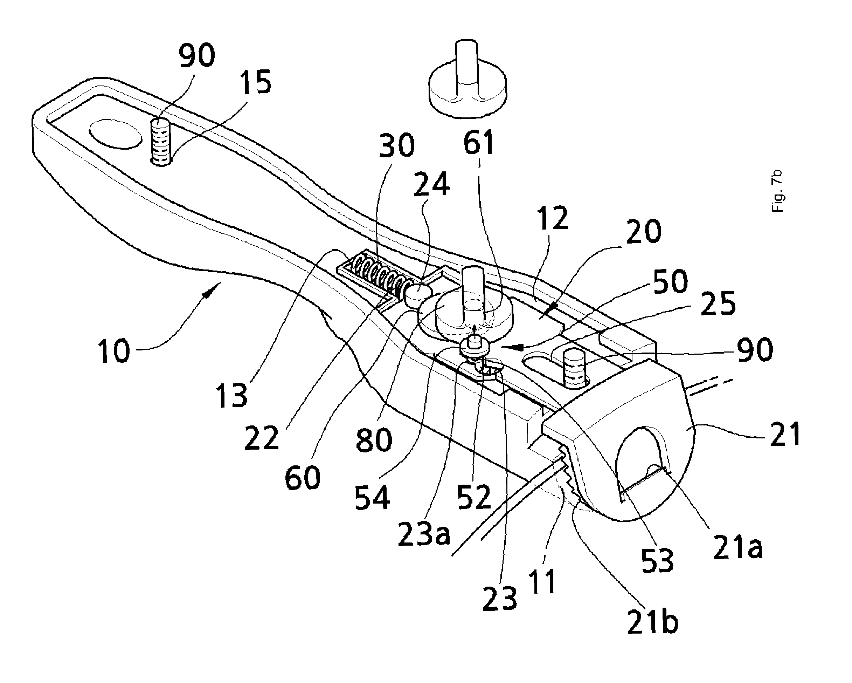

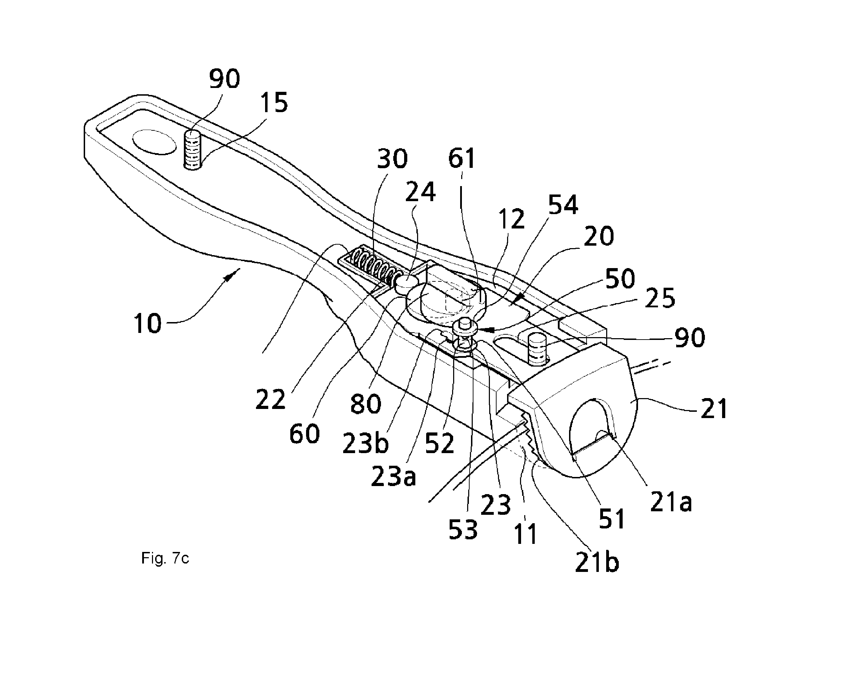

FIG. 7A is a view illustrating a state in which the detachable handle according to the present invention releases a kitchen container. FIG. 7B is a view illustrating a state in which the detachable handle according to the present invention grips a kitchen container having a large thickness, and FIG. 7C is a view illustrating a state in which the detachable handle according to the present invention grips a kitchen container having a small thickness.

### * In the case of releasing a Kitchen Container *

As illustrated in FIG. 7A, if the button shaft 50 is pushed down in a state wherein a rim of a kitchen container (not shown) is gripped between the front protrusion 11 of the lower body 10 and the grip 21 of the main pivoting plate 20, the small-diameter portion 53 of the button shaft 50 is engaged into the elongated small-diameter hole 23b of the main pivoting plate 20 by overcoming elasticity of the vertical spring 40.

Then, if the lever 80 is rotated clockwise, the rotating plate 60 is rotated clockwise about the eccentrically located pivoting shaft 61, thus causing the main pivoting plate 20 to be moved forward under the assistance of elasticity of the horizontal spring 30 and consequently, allowing the handle to release the kitchen container.

### * In the case of gripping a Kitchen Container having a large thickness *

As illustrated in FIG. 7B, if the lever 80 is rotated counterclockwise by an angle of 45 degrees in a state wherein a rim of a kitchen container having a large thickness is located between the front protrusion 11 of the lower body 10 and the grip 21 of the main pivoting plate 20, the rotating plate 60 is rotated counterclockwise by an angle of 45 degrees about the eccentrically located pivoting shaft 61, thus acting to push the target rod 24 arcuately coming into contact with the rotating plate 60 and consequently, allowing the main pivoting plate 20 to be moved rearward toward the rim of the kitchen container having a large thickness by overcoming elasticity of the horizontal spring 30. As a result, the grip 21 can act to push the rim of the kitchen container having a large thickness toward the front protrusion 11, thereby coming into close contact with and gripping the rim of the kitchen container.

In this case, when the main pivoting plate 20 is moved rearward, the medium-diameter portion 52 of the button shaft 50 is engaged into the medium-diameter hole 23a by elasticity of the vertical spring 40, thus preventing the main pivoting plate 20 from being moved forward by elasticity of the horizontal spring 30 and consequently, allowing the kitchen container to be continuously kept in a gripped state.

### * In the case of gripping a Kitchen Container having a small thickness *

As illustrated in FIG. 7C, if the lever 80 is rotated counterclockwise by an angle of 90 degrees in a state wherein a rim of a kitchen container having a small thickness is located between the front protrusion 11 of the lower body 10 and the grip 21 of the main pivoting plate 20, the rotating plate 60 is rotated counterclockwise by an angle of 90 degrees about the eccentrically located pivoting shaft 61, thus acting to push the target rod 24 arcuately coming into contact with the rotating plate 60 and consequently, allowing the main pivoting plate 20 to be moved rearward toward the rim of the kitchen container having a small thickness by overcoming elasticity of the horizontal spring 30. As a result, the grip 21 can act to push the rim of the kitchen container having a small thickness toward the front protrusion 11, thereby coming into close contact with and gripping the rim of the kitchen container.

In this case, when the main pivoting plate 20 is moved rearward, the large-diameter portion 51 of the button shaft 50 is engaged into the large-diameter hole 23 by elasticity of the vertical spring 40, thus preventing the main pivoting plate 20 from being moved forward by elasticity of the horizontal spring 30 and consequently, allowing the kitchen container to be continuously kept in a gripped state.

With the above described configuration and operation of the detachable handle usable with the kitchen container according to the present invention, the main pivoting plate 20 is reciprocally moved forward or rearward under the assistance of elasticity of the horizontal spring 30 as the rotating plate 60 is eccentrically rotated clockwise or counterclockwise to arcuately come into contact with the target rod 24, whereby the front protrusion 11 of the lower body 10 and the grip 21 can be moved toward or away from each other in a simplified manner. As a result, the detachable handle according to the present invention can grip or release a kitchen container according to a thickness of the kitchen container, resulting in convenience in use and superior productivity and assembly efficiency owing to a simplified and firm configuration thereof.

As apparent from the above description, the present invention is applicable to an industrial field related to handles used to grip kitchen containers.

Although the preferred embodiment of the present invention has been disclosed for illustrative purposes, those skilled in the art will appreciate that various modifications, additions and substitutions are possible, without departing from the scope of the invention as disclosed in the accompanying claims.

## Claims

1. A detachable handle for a kitchen container comprising:
a lower body having a front protrusion formed at a front end thereof, a main recess extending rearward from the front protrusion, a horizontal recess extending rearward from the main recess, and a vertical recess indented in the main recess;
a main pivoting plate configured to be seated in the main recess of the lower body, the main pivoting plate having a grip extending downward from a front end thereof to face the front protrusion of the lower body, a supporting pin extending toward the horizontal recess, a large-diameter hole coinciding with the vertical recess, a medium-diameter hole and an elongated small-diameter hole extending rearward from the large-diameter hole in sequence, and a target rod formed at a rear end thereof;
a horizontal spring fitted to the supporting pin while being mounted in the horizontal recess, so as to push the main pivoting plate toward the front protrusion of the lower body;
a vertical spring inserted into the vertical recess of the lower body;
a button shaft supported by the vertical spring and having a large-diameter portion having the same diameter as that of the large-diameter hole, a medium-diameter portion having the same diameter as that of the medium-diameter hole, a small-diameter portion having the same diameter as that of the elongated small-diameter hole, and an expanded holding portion extending upward from the small-diameter portion;
a rotating plate adapted to be rotated about an eccentrically positioned pivoting shaft thereof so as to push the target rod toward the horizontal spring while arcuately coming into contact with the target rod;
an upper body shaped to coincide with the lower body and having a button hole through which the button shaft is inserted to protrude upward such that the expanded holding portion is supported by the upper body, a shaft hole through which the pivoting shaft is inserted to protrude upward, and a circular recess indented in an upper surface of the upper body around the shaft hole; and
a lever seated in the circular recess while being coupled to the pivoting shaft, the lever being rotatable clockwise or counterclockwise.

2. The detachable handle according to claim 1, wherein the grip has a bottle opener hole.

3. The detachable handle according to claim 1, wherein the upper body is perforated with a fastening hole and the lower body is perforated with a fastening recess,
wherein the detachable handle further comprises a fastening bolt to be fastened into the fastening recess by passing through the fastening hole.

4. The detachable handle according to claim 3, wherein the main pivoting plate further has an elongated fastening slot serving as a passage of the fastening bolt.

5. The detachable handle according to any one of claims 1 to 4, wherein the grip further has an embossed cushion formed at a surface thereof facing the front protrusion of the lower body.
